# EUROPEAN PATENT APPLICATION

(11) **EP 2 685 681 A1**
(43) Date of publication of application: **15.01.2014**
(21) Application number: 12176270.2
(22) Date of filing: 13.07.2012
(51) Int. Cl.: H04L 12/58

(54) **Methods And Devices For Facilitating Email Account Configuration**

(71) Applicant: BlackBerry Limited, Waterloo, ON N2K 0A7 (CA)
(72) Inventor: Schultz, Charles Peter, North Miami Beach, FL Florida 33162 (US)
(74) Representative: Patel, Binesh

(57) **Abstract**

Methods and electronic devices for facilitating email account configuration are described. In one aspect, a first electronic device establishes a connection with an administration server that stores email information received from a second electronic device. The first electronic device then receives the email information from the administration server, and subsequently populates one or more interface elements in an account configuration interface of an email application based on the received email information for email account setup of one or more email addresses.

## Description

### TECHNICAL FIELD

The present application relates to email management, and more particularly to methods and electronic devices for facilitating email account configuration.

### BACKGROUND

Electronic devices such as mobile phones, smartphones, PDAs (personal digital assistants), tablets, etc. are often equipped with email access capabilities. For example, electronic devices may be loaded with email client applications such as Microsoft Outlook^{™} by Microsoft Corp., Lotus Notes^{™} by IBM, Inc., Mail^{™} by Apple, Inc., etc. Email client applications provide "on-device" access and management capabilities of an email mailbox to a user of the electronic device. Additionally, electronic devices may include web browsing capabilities to provide access to web-based email applications (*i.e.* a webmail). For example, electronic devices may be loaded with a web browser to access and manage an email mailbox of a user hosted by a webmail service provider such as Hotmail^{™} by Microsoft Corp., Gmail^{™} by Google, Inc., AOL Mail^{™} by AOL, Inc.

It is common for users of electronic devices to have multiple email mailboxes identified by multiple email addresses. A user may, for example, have a primary personal, secondary personal and/or work email addresses. These email addresses may be email client and/or webmail types. In order to manage multiple email mailboxes for multiple email addresses, various email applications providing mailbox platforms are available (for example, BlackBerry Enterprise Server^{™} by Research In Motion Ltd., iCloud^{™} by Apple, Inc., Gmail^{™} by Google, Inc., etc.) which allow a user to access all of his/her email mailboxes from a single application. However, these email applications with mailbox platforms are tedious and time-consuming to set up, especially for users with limited computing capabilities. Accordingly, users may often forego setting up email applications with mailbox platforms.

### BRIEF SUMMARY

In one aspect, the present application discloses a method implemented by a processor of a first electronic device. The method includes: establishing a connection with a server that stores email information received from a second electronic device; receiving the email information from the server; and populating one or more interface elements in an account configuration interface of an email application based on the received email information for email account setup of one or more email addresses.

In another aspect, the present application describes a first electronic device. The first electronic device includes a communication subsystem and a memory. The first electronic device also includes a processor coupled with the memory and the communication subsystem. The processor is configured to: establish a connection with a server that stores email information received from a second electronic device; receive the email information from the server; and populate one or more interface elements in an account configuration interface of an email application based on the received email information for email account setup of one or more email addresses.

In yet another aspect, the present application describes a method implemented by a processor of a server. The method includes: receiving a communication from a second electronic device, wherein the communication includes email information; establishing a connection with a first electronic device; and sending the email information to the first electronic device to populate one or more interface elements in an account configuration interface of an email application based on the email information for email account setup of one or more email addresses.

Other example embodiments of the present disclosure will be apparent to those of ordinary skill in the art from a review of the following detailed description in conjunction with the drawings.

Example embodiments of the present disclosure are not limited to any particular operating system, mobile device architecture, server architecture or computer programming language.

### BRIEF DESCRIPTION OF THE DRAWINGS

Reference will now be made, by way of example, to the accompanying drawings which show example embodiments of the present disclosure, and in which:

FIG. 1 is a block diagram illustrating an example operating environment in accordance with example embodiments of the present disclosure;

FIG. 2 is a block diagram illustrating an example electronic device in accordance with example embodiments of the present disclosure;

FIG. 3 is a block diagram illustrating an example server in accordance with example embodiments of the present disclosure;

FIG. 4 is a flowchart illustrating an example method of facilitating email account configuration in accordance with example embodiments of the present disclosure; and

FIG. 5 is an example email account configuration page for email account setup in accordance with example embodiments of the present disclosure.

Like reference numerals are used in the drawings to denote like elements and features.

### DETAILED DESCRIPTION

### System Overview

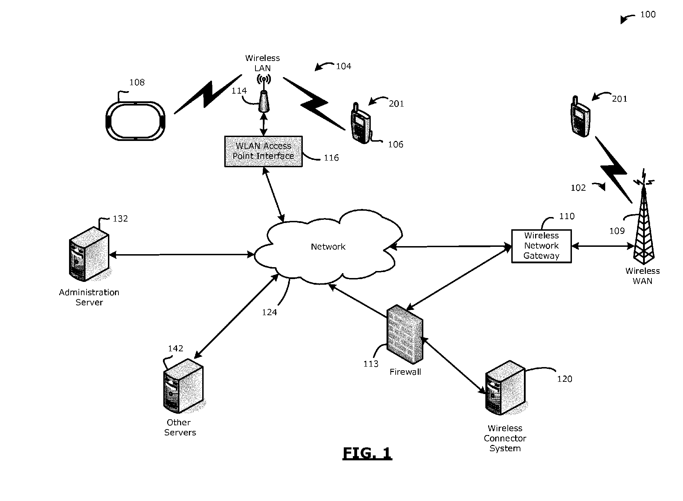

Reference is first made to FIG. 1, which shows in block diagram form a communication system 100 in which example embodiments of the present disclosure can be applied. The communication system 100 is configured to allow a first electronic device 106 to configure an email application. More specifically, the first electronic device 106 configures the email application based on email information received from a server (such as an administrative server 132) that stores email information sent by a second electronic device 108. That is, the server facilitates email account configuration on the first electronic device 106 based on the email information.

In the example embodiment illustrated, the first electronic device 106 is a mobile communication device 201 (More specifically, the first electronic device 106 is a smartphone, however, in other example embodiments the first electronic device 106 may take other forms) which may be connected to the remainder of the system 100 in any of several different ways. As illustrated, the communication system 100 includes a number of mobile communication devices 201. The mobile communication devices 201 are configured to communicate with other electronic devices, servers and/or systems (*i.e*. they are "communication" devices) and the mobile communication devices 201 are portable and may be easily moved between different physical locations (*i.e*. they are "mobile" devices). However, in other example embodiments, the mobile communication devices 201 may not be portable (*i.e*. may not be "mobile" devices).

Similarly, in the example embodiment illustrated, the second electronic device 108 is a tablet computer. However, the second electronic device 108 may take other forms. By way of example, the second electronic device 108 may be a smartphone, and may have the same capabilities as the first electronic device 106 as a mobile communication device 201.

Several instances of mobile communication devices 201 are depicted in FIG. 1 employing different example ways of connecting to the system 100. The mobile communication devices 201 are connected to a communication network such as a wireless network which may include one or more of a Wireless Wide Area Network (WWAN) 102 and a Wireless Local Area Network (WLAN) 104 or other suitable network arrangements. In some example embodiments, the mobile communication devices 201 are configured to communicate over both the WWAN 102 and WLAN 104, and to roam between these networks. In some example embodiments, the wireless network may include multiple WWANs 102 and WLANs 104.

The WWAN 102 may be implemented as any suitable wireless access network technology. By way of example but not limitation, the WWAN 102 may be implemented as a wireless network that includes a number of transceiver base stations 109 (one of which is shown in FIG. 1) where each of the transceiver base stations 109 provides wireless Radio Frequency (RF) coverage to a corresponding area or cell. The WWAN 102 may be operated by a mobile network service provider that provides subscription packages to users of the mobile communication devices 201. In some example embodiments, the WWAN 102 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSDPA (HighSpeed Downlink Packet Access), IEEE 802.16e (also referred to as Worldwide Interoperability for Microwave Access or "WiMAX), or various other networks. Although WWAN 102 is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN 102 may further include a wireless network gateway 110 which provides an interface to a public network 124. The public network 124 includes the Internet and may additionally include one or more private networks or lines, a virtual private network, or any other suitable network.

In some cases, the system 100 may include a wireless connector system 120 behind a firewall 113. The wireless connector system 120 may be operated, for example, by an organisation or enterprise such as a corporation, university, wireless carrier or governmental department. The wireless connector system 120 may be part of an enterprise network (not shown), and may be configured to relay messages and/or other data to the mobile communication devices 201, for example in a push-email architecture. The wireless connector system 120 may, in some cases, connect to the wireless network gateway 110 or other interfaces for relaying messaging data to and from mobile communication devices 201. In at least some example embodiments, the wireless connector system 120 may provide integration and synchronization services of messages to the mobile communication devices 201. For example, the wireless connector system 120 may coordinate incorporation of a plurality of email mailboxes to allow a user to receive and access email messages sent to the email mailboxes from a single location on the mobile communication device 201.

The WLAN 104 includes a wireless network which, in some example embodiments, conforms to IEEE 802.11x standards (sometimes referred to as Wi-Fi) such as, for example, the IEEE 802.11a, 802.11b, 802.11g, or 802.11n standards. Other communication protocols may be used for the WLAN 104 in other example embodiments such as, for example, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in FIG. 1) that collectively provide a WLAN coverage area.

The WLAN 104 may be a personal network of the user, an enterprise network, or a hotspot offered by an Internet service provider (ISP), a mobile network provider, or a property owner in a public or semi-public area, for example. The access points 114 are connected to an access point (AP) interface 116 which may connect to the public network 124. The AP interface 116 provides translation and routing services between the access points 114 and the network 124.

In the illustrated example embodiment, the second electronic device 108 is shown connected to the WLAN 104 to communicate with the public network 124 and connected resources and services (for example, the administration server 132). As mentioned above, the second electronic device 108 may be of other types and may be connected to the public network 124 in other ways, for example, via the WWAN 102, or non-wirelessly via an Ethernet or USB connection.

A mobile communication device 201 may alternatively connect to the network 124 using a computer, such as a desktop or a notebook computer, and a link such as a physical interface or short-range wireless communication interface (not shown). The physical interface may include one or combinations of an Ethernet connection, Universal Serial Bus (USB) connection, Firewire^{™} (also known as an IEEE 1394 interface) connection, or other serial data connection, via respective ports or interfaces of the mobile communication device 201 and computer. The short-range wireless communication interface may be a personal area network (PAN) interface. A personal area network is a wireless point-to-point connection meaning no physical cables are required to connect the two end points. The short-range wireless communication interface may include one or a combination of an infrared (IR) connection such as an Infrared Data Association (IrDA) connection, a short-range radio frequency (RF) connection such as one specified by IEEE 802.15.1 or the Bluetooth^{™} special interest group, or IEEE 802.15.3a, also referred to as UltraWideband (UWB), or other PAN connection.

It will be appreciated that the above-described communication system 100 is provided for the purpose of illustration only, and that the above-described communication system 100 includes one possible communication network configuration of a multitude of possible configurations for use with the mobile communication devices 201. The teachings of the present application may be employed in connection with any other type of network and associated devices that are effective in implementing or facilitating wireless communication.

The system 100 further includes an administration server 132 for facilitating email account configuration and other servers 142, such as web servers, application servers, database servers, etc.

The administration server 132, in at least some example embodiments, is configured to facilitate email account configuration on the first electronic device 106. That is, the administration server 132 may assist the first electronic device in email application configuration for email account setup. For example, in at least some example embodiments, the administration server 132 may receive a communication (for example, an email message or an instant message) from the second electronic device 108 that includes email information. The administration server 132 may store the email information, and upon establishing a connection with the first electronic device 106, the administration server 132 may retrieve and send the email information to the first electronic device 106 to populate one or more interface elements in an email account configuration interface of the email application on the first electronic device 106 based on the email information.

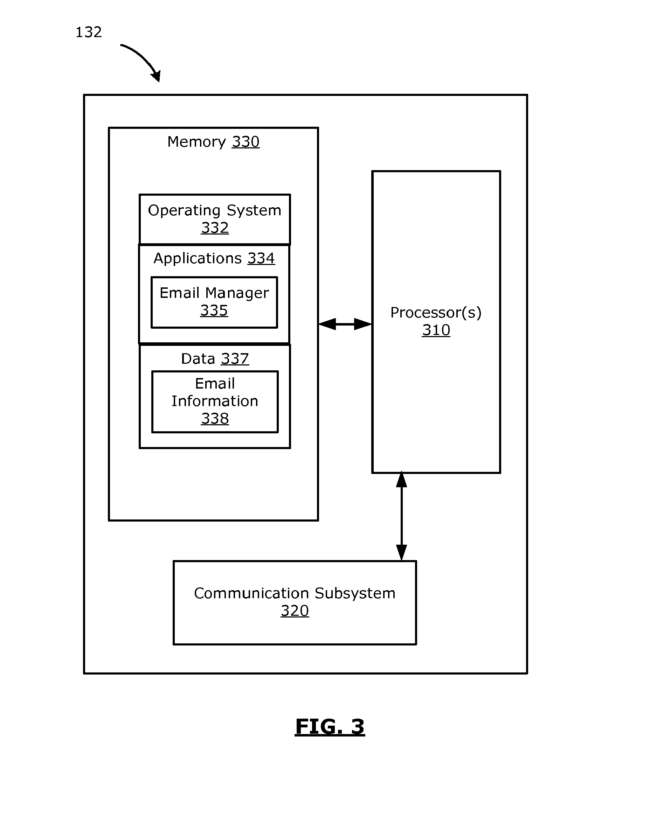

In at least some example embodiments, the administration server 132 may host an email platform application (such as an email manager 335(FIG. 3)) to provide email coordination services to the first electronic device 106. That is, the email platform application may manage and streamline email communications sent to mailboxes hosted by various email service providers which are accessed by a user of the first electronic device 106. For example, the email platform application may work in conjunction with the email application and the email service providers to integrate a plurality of mailboxes so that a user accessing the email application may have access to all of the messages sent to the various mailboxes without having to access each mailbox individually. In such example embodiments, the email platform application may facilitate email account configuration on the first electronic device 106. Examples of such email platform applications may include BlackBerry Enterprise Server^{™} by Research In Motion Ltd., iCloud^{™} by Apple, Inc., etc.

Example components and features of the administration server 132 will be discussed in greater detail below with reference to FIG. 3.

### Example Electronic Device

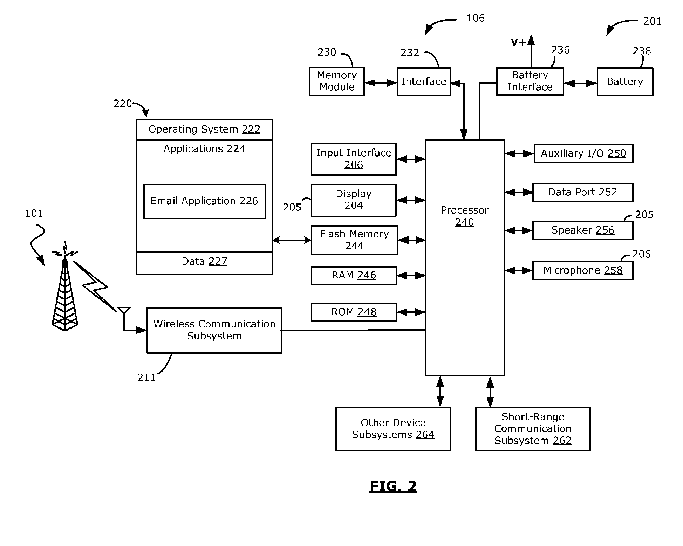

An overview having been provided, reference will now be made to FIG. 2, which illustrates an example first electronic device 106. In the illustrated example embodiment, the first electronic device 106 is a mobile communication device 201. In at least some example embodiments, the mobile communication device 201 is a two-way communication device having data and voice communication capabilities, and the capability to communicate with other computer systems and servers, for example, via the network 124 (FIG. 1). Depending on the functionality provided by the first electronic device 106, in various example embodiments the first electronic device 106 may be a multiple-mode communication device configured for both data and voice communication, a mobile telephone such as a smartphone, a tablet computer such as a slate computer, a wearable computer such as on a watch or eye glasses, a PDA (personal digital assistant) or a mobile or stationary computer system such as a desktop, netbook, laptop, notebook or a computer system that is built-in another machine or apparatus, for example, a vehicle.

A smartphone is a mobile phone which offers more advanced computing capabilities than a basic non-smart cellular phone. For example, a smartphone may have the ability to run third party applications which are stored on the smartphone.

A tablet computer (which may also be referred to as a tablet) is an electronic device which is generally larger than a mobile phone (such as a smartphone) or personal digital assistant. Many mobile phones or personal digital assistants are designed to be pocket sized. That is, mobile phones or personal digital assistants are generally small enough to be carried by a person easily, often in a shirt or pant pocket while tablet computers are larger and may not fit within pant pockets. For example, many tablet computers have a height which is seven inches (7") or more. In some example embodiments, the tablet computer may be a slate computer. A slate computer is a tablet computer which does not include a dedicated keyboard. A slate computer may allow for text input through the use of a virtual keyboard or an external keyboard which connects to the slate computer via a wired or wireless connection. As illustrated in FIG. 1, in one example embodiment, the second electronic device 108 is a tablet computer of the type described herein.

In other example embodiments, the first electronic device 106 may be of a type not specifically listed above.

The mobile communication device 201 includes a housing (not shown) which houses components of the mobile communication device 201. Internal components of the mobile communication device 201 may be constructed on a printed circuit board (PCB). The mobile communication device 201 includes a controller including at least one processor 240 (such as a microprocessor) which controls the overall operation of the mobile communication device 201. The processor 240 interacts with device subsystems such as a wireless communication subsystem 211 for exchanging radio frequency signals with a wireless network 101 to perform communication functions. The processor 240 interacts with additional device subsystems including one or more input interfaces 206 (such as a keyboard, one or more control buttons, one or more microphones 258, and/or a touch-sensitive overlay associated with a touchscreen display), flash memory 244, random access memory (RAM) 246, read only memory (ROM) 248, auxiliary input/output (I/O) subsystems 250, a data port 252 (which may be a serial data port, such as a Universal Serial Bus (USB) data port), one or more output interfaces 205 (such as a display 204 (which may be a liquid crystal display (LCD)), one or more speakers 256, or other output interfaces 205), a short-range communication subsystem 262, and other device subsystems generally designated as 264. Some of the subsystems shown in FIG. 2 perform communication-related functions, whereas other subsystems may provide "resident" or on-device functions.

The mobile communication device 201 may include a touchscreen display in some example embodiments. The touchscreen display may be constructed using a touch-sensitive input surface connected to an electronic controller. The touch-sensitive input surface overlays the display 204 and may be referred to as a touch-sensitive overlay. The touch-sensitive overlay and the electronic controller provide a touch-sensitive input interface 206 and the processor 240 interacts with the touch-sensitive overlay via the electronic controller. That is, the touchscreen display acts as both an input interface 206 and an output interface 205.

The particular design of the wireless communication subsystem 211 depends on the wireless network 101 in which the mobile communication device 201 is intended to operate. The wireless network 101 may include the WWAN 102 (FIG. 1) or the WLAN 104 (FIG. 1). The mobile communication device 201 may send and receive communication signals over the wireless network 101 after the required network registration or activation procedures have been completed.

In at least some example embodiments, the auxiliary input/output (I/O) subsystems 250 may include an external communication link or interface, for example, an Ethernet connection. The auxiliary I/O subsystems 250 may include a pointing or navigational tool (input device) such as a clickable trackball or scroll wheel or thumbwheel, or a vibrator for providing vibratory notifications in response to various events on the mobile communication device 201 such as receipt of an electronic message or incoming phone call, or for other purposes such as haptic feedback (*i.e*. touch feedback).

In at least some example embodiments, the mobile communication device 201 also includes a removable memory module 230 (typically including flash memory) and a memory module interface 232. Network access may be associated with a subscriber or user of the mobile communication device 201 via the memory module 230, which may be a Subscriber Identity Module (SIM) card for use in a GSM network or other type of memory module for use in the relevant wireless network type. The memory module 230 may be inserted in or connected to the memory module interface 232 of the mobile communication device 201.

The mobile communication device 201 may store data 227 in an erasable persistent memory, which in one example embodiment is the flash memory 244. In various example embodiments, the data 227 may include service data having information required by the mobile communication device 201 to establish and maintain communication with the wireless network 101. The data 227 may also include user application data such as email messages, address book and contact information, calendar and schedule information, notepad documents, image files, and other commonly stored user information stored on the mobile communication device 201 by its user, and other data. The data 227 stored in the persistent memory (e.g. flash memory 244) of the mobile communication device 201 may be organized, at least partially, into a number of databases or data stores each containing data items of the same data type or associated with the same application. For example, email messages, contact records, and task items may be stored in individual databases within the mobile communication device 201 memory.

In at least some example embodiments, the mobile communication device 201 is provided with a service routing application programming interface (API) which provides an application with the ability to route traffic through a serial data (*i.e*. USB) or Bluetooth^{®} (Bluetooth^{®} is a registered trademark of Bluetooth SIG, Inc.) connection to the host computer system using standard connectivity protocols.

The mobile communication device 201 also includes a battery 238 as a power source, which is typically one or more rechargeable batteries that may be charged, for example, through charging circuitry coupled to a battery interface 236 such as the serial data port 252. The battery 238 provides electrical power to at least some of the electrical circuitry in the mobile communication device 201, and the battery interface 236 provides a mechanical and electrical connection for the battery 238. The battery interface 236 is coupled to a regulator (not shown) which provides power V+ to the circuitry of the mobile communication device 201.

The short-range communication subsystem 262 is an additional optional component which provides for communication between the mobile communication device 201 and different systems or devices, which need not necessarily be similar devices. For example, the short-range communication subsystem 262 may include an infrared device and associated circuits and components, or a wireless bus protocol compliant communication mechanism such as a Bluetooth^{®} communication module to provide for communication with similarly-enabled systems and devices.

A pre-determined set of applications that control basic device operations, including data and possibly voice communication applications may be installed on the mobile communication device 201 during or after manufacture. Additional applications and/or upgrades to an operating system 222 or software applications 224 may also be loaded onto the mobile communication device 201 through the wireless network 101, the auxiliary I/O subsystem 250, the data port 252, the short-range communication subsystem 262, or other suitable device subsystems 264. The downloaded programs or code modules may be permanently installed, for example, written into the program memory (e.g. the flash memory 244), or written into and executed from the RAM 246 for execution by the processor 240 at runtime.

The processor 240 operates under stored program control and executes software modules 220 stored in memory such as persistent memory; for example, in the flash memory 244. As illustrated in FIG. 2, the software modules 220 may include operating system software 222 and one or more additional applications 224, such as an email application 226. In the example embodiment of FIG. 2, the email application 226 is implemented as a separate stand-alone application 224, but in other example embodiments, the email application 226 could be implemented as part of the operating system 222 or another application 224.

The email application 226, in at least some example embodiments, may create a mailbox platform correlating to one or more email addresses. That is, the email application 226 provides a user with a platform to access electronic messages delivered to the associated with one or more email addresses. In at least some example embodiments, the email messages are stored in one or more mailboxes on a server, such as a database server, when delivered to the associated one or more email addresses. The email messages may then be retrieved by the email application 226 to allow a user access to the email messages. That is, the email messages are retrieved from the one or more database servers that are then accessible by a user of the mobile communication device 201.

The email application 226 may retrieve the email messages by various formats. For example, in at least some example embodiments, the email application 226 may employ a Post Office Protocol (POP) to retrieve the email messages. A POP is an application-layer internet standard protocol to retrieve email messages. Under the POP protocol, email messages are removed from the database server during the first retrieval, and may be stored locally on the mobile communication device 201, for example in the data area 227 of memory. In other example embodiments, the email application 226 may employ an Internet Message Access Protocol (IMAP) to retrieve the email messages. Similar to POP, IMAP is also an application-layer internet standard protocol to retrieve email messages. However, under the IMAP protocol, email messages are not removed from the database server during retrieval, and remain in the database server for future access. The retrieved email may also be stored locally on the mobile communication device 201.

The mailbox platform provided by the email application 226 may include various graphical user interfaces (GUIs) to provide a user with an interface to interact with the mailbox platform. A GUI is a type of user interface that allows the user to interact with a device and/or an application utilizing images rather than text commands. The GUI represents information and actions available to the user through graphical icons and visual indicators. The GUI can be implemented by various programming languages including JavaScript, .NET, C++, etc. Accordingly, a user of the mobile communication device 201 may access, modify and delete email messages by interfacing with the associated GUI of the mailbox platform.

In at least some example embodiments, the email application 226 may interact with a coordinating application, for example, the email manager 335(FIG. 3) on the administration server 132, in order to set up the mailbox platform. That is, the email manager 335 may assist the email application 226 in integrating a plurality of mailboxes that may be accessed via the mailbox platform. In such example embodiments, the email manager 335 may act as a coordinator between the various mailboxes (hosted by the email service providers) and the mailbox platform. That is, the email manager 335, instead of the email application 226, may retrieve email messages received at the mailboxes and may "push" the messages to the mailbox platform so that they are accessible by a user.

In at least some example embodiments, the email application 226 may display a GUI (for example, an email account configuration GUI) having one or more interface elements for allowing a user to input information associated with an email address to set up the mailbox platform. In at least some example embodiments, the one or more interface elements may include one or more fields for inputting information. For example, the email application 226 may provide a GUI having a description field (for inputting an email address type), a username field (for inputting a user name associated with an email address), an email address field (for inputting an email address) and/or a password field (for inputting a password associated with an email address). The GUI may include other fields not specifically described herein. Accordingly, the email application 226 may create a mailbox platform correlating to an email address after information is input in one or more interface elements (for example, one or more fields) associated with the email address.

In at least some example embodiments, the email application 226 may, in conjunction with the administration server 132, facilitate email account configuration for a user of the first electronic device 106. For example, the email application may establish a connection with the administration server 132 that stores email information received from a second electronic device 108. After establishing a connection, the administration server 132 sends the email information to the first electronic device 106 which is received by the email application 226. The email application 226 may then configure the email application 226 to populate itself based on the received email information. For example, one or more interface element fields in an email account configuration GUI provided by the email application may be automatically populated without any user input. Accordingly, the email application 226 with the administration server 132 facilitates email account configuration.

In at least some example embodiments, the operating system 222 may perform some or all of the functions of the email application 226. In other example embodiments, the functions or a portion of the functions of the email application 226 may be performed by one or more other applications 224. Further, in at least some example embodiments, the functions of the email application 226 may be provided by a plurality of software modules 220. In at least some example embodiments, these software modules 220 may be divided among multiple applications 224.

It will be appreciated that the second electronic device 108 (FIG. 1) may be of the same configuration as the first electronic device 106 which is described above. Additionally, the second electronic device 108 may be a communication device of any type described above.

### Example Administration Server

Reference is next made to FIG. 3 which illustrates an example administration server 132. Although the discussion below describes a single server, it will be understood that the functions of the administration server 132 may be implemented across multiple networked servers, such as a server farm, or any other suitable computing architecture. The administration server 132 includes one or more processors 310 (such as a microprocessor) which control the overall operation of the administration server 132. The processor 310 may include a single processor with multiple cores, or multiple processors (with single or multiple cores). The processor 310 interacts with a communication subsystem 320 to perform communication functions via the network 124 with other systems, servers and/or devices such as the first electronic device 106 (FIG. 1) and the second electronic device 108 (FIG. 1). The processor 310 interacts with additional components including a memory 330.

The processor 310 operates under stored program control and executes software stored in the memory 330. The software may include operating system software 332 and one or more additional applications 334, such as an email manager 335, which may carry out specific functions of the administration server 132. For example, in at least some example embodiments, the email manager 335 may facilitate email account configuration on the first electronic device 106.

The processor 310 may store data in the memory 330 such as for example data required by the administration server 132 to carry out its functionalities and maintain communication with the wireless network. While the memory 330 is illustrated as a single component, it may include multiple memory components of various types. For example, the memory 330 may include Random Access Memory (RAM), Read Only Memory (ROM), a Hard Disk Drive (HDD), a Solid State Drive (SSD), Flash Memory, or other types of memory. It will be appreciated that each of the various memory types will be best suited for different purposes and applications.

In at least some example embodiments, in order to facilitate email account configuration, the email manager 335 may receive a communication having email information from a second electronic device 108 (FIG. 1). The email manager 335 may then establish a connection with a first electronic device 106 (FIG. 1). Upon establishing the connection, the email manager 335 may send the email information to the first electronic device 106 for configure an email application 226 (FIG. 2) on the first electronic device 106. In configuring the email application 226, the first electronic device 106 may populate one or more interface elements in an account configuration interface of the the email application 226 based on the received email information from the administration server 132.

In at least some example embodiments, the email information 338 in the communication received by the email manager 335 from the second electronic device 108 may be stored in the data area 337 of the memory 330. In such example embodiments, the email manager 335, in sending the email information 338 to the first electronic device 106, may retrieve the email information 338 from the memory 330. In other example embodiments, the email manager 335 may retrieve the email information 338 from another server, device and/or system. The server, device and/or system storing the email information 338 may be remotely connected to the administration server 132.

In at least some example embodiments, the operating system 332 may perform some or all of the functions of the email manager 335. In other example embodiments, the functions or a portion of the functions of the email manager 335 may be performed by one or more other applications 334. Further, while the email manager 335 has been illustrated as a single block, the email manager 335 may include a plurality of software modules. In at least some example embodiments, these software modules may be divided among multiple applications.

The administration server 132 illustrated in FIG. 3 is an example server. In other example embodiments, servers may be used which have configurations and/or functions which are not specifically described herein.

### Facilitating Email Account Configuration

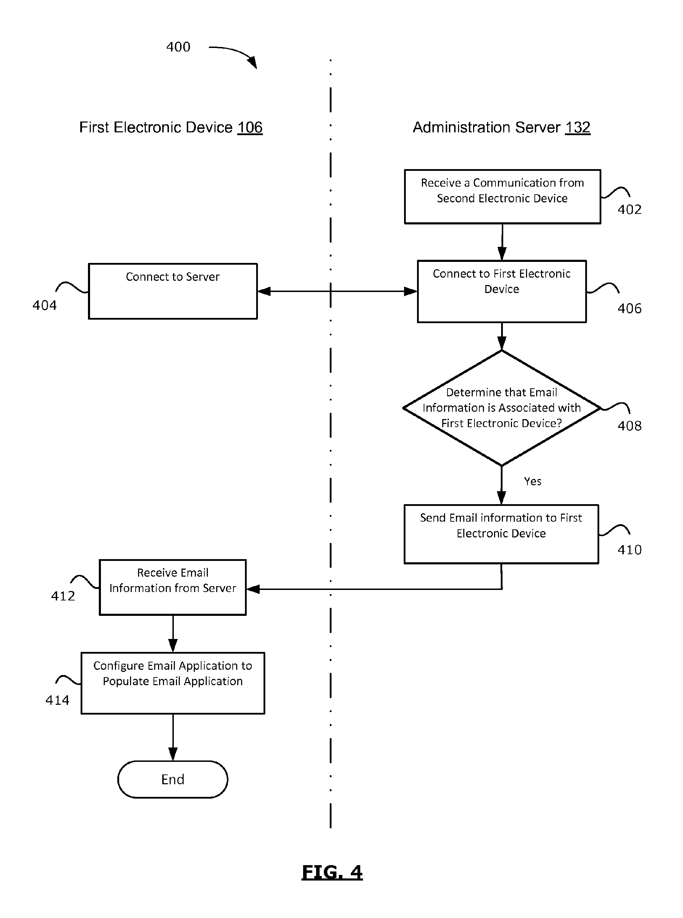

Reference will now be made to FIG. 4, in which an example method 400 of facilitating email account configuration is illustrated in flowchart form. Portions of the method 400 may be implemented by the first electronic device 106 (FIG. 1) and portions may be implemented by the administration server 132 (FIG. 1). One or more applications or modules (such as the email application 226) on the first electronic device 106 may contain computer readable instructions for causing a processor 240 associated with the first electronic device 106 to perform the electronic device-specific operations and one or more applications or modules (such as the email manager 335) on the administration server 132 may contain computer readable instructions for causing a processor 310 associated with the administration server 132 to perform the server-specific operations.

Any one or more operations of method 400 may, in at least some example embodiments, be provided by other systems, software applications or modules apart from those specifically discussed herein.

At 402, the administration server 132 receives a communication that includes email information from a second electronic device 108 (FIG. 1). In at least some example embodiments, the communication may be received via the communication subsystem 320 associated with the administration server 132. For example, the communication may be received from a user instructing the second electronic device 108 to send the communication to the administration server 132. That is, for example, a user may compose a communication having email information, and may instruct or command the second electronic device 108 to send the communication.

Accordingly, in such example embodiments, the communication may be received from a user interacting with an input interface associated with the second electronic device 108 to create and send the communication to the administration server 132. For example, the communication may be composed and sent via a navigational input device such as a trackball, track pad or touchscreen, or a physical keyboard associated with the second electronic device 108.

In at least some example embodiments, the administration server 132 may receive the communication from the memory 330. For example, in at least some example embodiments, the administration server may retrieve the communication from the data area 337 of the memory 330. That is, the communication which is received at 402 may be a communication which was previously received from the second electronic device 108 and stored in the memory 330 of the administration server 132.

The communication may be received in various formats. For example, in at least some example embodiments, the communication may be received from a messaging application associated with the second electronic device 108. In such example embodiments, the received communication may be in the form of an email, a SMS, a MMS, and/or an instant message. Accordingly, the administration server 132 may receive any one or more of an email, a SMS, a MMS and/or an instant message having email information.

The email information included in the communication defines email related information of a user. That is, the email information may include an email address, an email account identifier (which identifies the email address type) and/or identification information (which identifies the email information with the first electronic device 106). The email information may include other types of information not specifically described herein. Greater details of the email information are provided below.

In at least some example embodiments, the email information may be extracted from the received communication and may be stored in the memory 330 (for example, in the data area 337 of the memory 330) of the administration server 132.

At 404 and 406 a connection is established between the administration server 132 and the first electronic device 106. That is, a communication link is established between the first electronic device 106 and the administration server 132 to enable them to communicate with one another. In at least some example embodiments, the connection may be established wirelessly using communication subsystems associated with the first electronic device 106 and the administration server 132. For example, the connection may be established via the network 124 (as illustrated in FIG. 1).

In at least some example embodiments, at 404, the first electronic device 106 may initiate a communication to establish a connection with the administration server 132. That is, the instruction to establish the connection with the administration server 132 originates from the first electronic device 106.

In at least some example embodiments, at 404, a user of the first electronic device 106 may input an instruction via an input interface 206 (for example, a navigational input device such as a trackball, track pad or touchscreen, or a physical keyboard associated with the first electronic device 106) to instruct the first electronic device 206 to establish a connection with the administration server 132. In at least other example embodiments, at 404, the initiation to establish a connection may be automatically performed by the first electronic device 106. That is, the first electronic device 106 may attempt to establish the connection with the administration server 132 without further user input.

In at least some example embodiments, the administration server 132, at 406, initiates a communication to establish a connection instead of the first electronic device 106. That is, the instruction to establish the connection with the first electronic device 106 originates from the administration server 132. In such example embodiments, similar to 404, the instruction to establish the connection may be manually inputted (for example, by an administrator) into the administration server 132 or automatically performed by the administration server 132.

In at least some example embodiments, when establishing a connection, the first electronic device 106 and the administration server 132 may create a trusted relationship between them. That is, the first electronic device 106 and the administration server 132 may exchange identification information with one another. The identification information may include a unique identifier or token that identifies a specific device, system and/or server (such as a PIN, SIM, IMSI, SIP URI, IP address, etc.) The exchanged identification information may be stored in both the first electronic device 106 and the administration server 132. Accordingly, the identification information may be retrieved and used to automatically maintain connections between the first electronic device 106 and the administration server 132 at 404 and/or 406, without have to re-start the connection process.

At 408, the administration server 132 may determine that the email information is associated with the first electronic device 106. As noted above, the received email information may include identification information, and the administration server 132 may associate the email information with the first electronic device 106 based on the identification information. That is, the administration server 132 may utilize the identification information to identify the email information as being associated with the first electronic device 106.

In at least some example embodiments, the identification information may include a unique identifier or token. As noted above, for example, the identifier or token may include a PIN, SIM, IMSI, SIP URI and/or IP address. The identifier or token is unique to an associated system, device or server, and it may be used to authenticate the associated system, device or server. Accordingly, the administration server 132 may use an identifier or token to identify the email information.

In at least some example embodiments, in determining that the email information is associated with the first electronic device 106, the administration server 132 may search the received email information for identification information. If found, the administration server 132 may verify that the located identification information is associated with the first electronic device 106.

In at least some example embodiments, in order to determine that the email information is associated with the first electronic device 106, the administration server 132 may parse the received email information for identification information. Parsing is a process of analyzing a set of data elements for structure in relation to a set of structural rules and producing a set of smaller data elements based on the structural rules. The data elements are matched with appropriate structural rules to break down the data elements. In such example embodiments, after the parsing process, if identification information is found, the administration server 132 may similarly verify that the located identification information is associated with the first electronic device 106.

For example, in at least some example embodiments, the first electronic device 106 may search and/or parse the received email information for an identifier (such as a PIN), and if found, the administration server 132 may compare the located identifier with one or more stored identifiers that include an identifier associated with the first electronic device 106. In at least some example embodiments, the administration server 132 may store one or more identifiers in the memory 330 of the administration server 132 including an identifier associated with the first electronic device 106. For example, the identifier associated with the first electronic device 106 may be received and stored during the connection process of 406. During the comparison process, if the located identifier matches a stored identifier associated with the first electronic device 106, the administration server 132 may determine that the email information is associated with the first electronic device 106.

After determining that the email information is associated with the first electronic device 106, the administration server 132 may send the email information to the first electronic device 106. The email information may be sent via the communication subsystem 320 over the network 124. In at least some example embodiments, the administration server 132 may retrieve the stored email information 338 from the memory 330 and send the email information to the first electronic device 106.

The sent email information is then received by the first electronic device 106 at 412. The email information may be received, for example, via the communication subsystem 211.

At 414, the first electronic device 106 configures an email application 226 to populate the email application based on the received email information for email account setup of one or more email addresses. As noted above, the email application 226, when set up, is configured to provide a mailbox platform correlating to one or more email addresses. Accordingly, in populating the email application 226, email account configuration for the associated one or more email addresses is facilitated.

In configuring the email application 226, in at least some example embodiments, the first electronic device 106 may search and/or parse the received email information for particular information. If, after searching and/or parsing, the particular information is found, the first electronic device 106 may extract the located information, and populate the email application 226. For example, in at least some example embodiments, the email application 226 displays an account configuration GUI having one or more interface elements (such as one or more fields) for receiving email information. Accordingly, the one or more interface elements are populated with the extracted information. That is, the one or more interface elements are automatically filled-in with information without requiring a user to input the information.

As noted above, in at least some example embodiments, the one or more interface elements may include one or more alphanumeric fields for receiving information. That is, the GUI displayed by the email application 226 may include one or more alphanumeric fields for receiving textual and numeric information. In at least some example embodiment, the GUI may display one or more of a description field, an email address field, a username field and/or a password field. The GUI may display other fields not specifically described herein. These fields are configured to receive appropriate information correlating to an email address. Upon input of information in the fields and execution of the email application 226, an email account is set up for the email application 226. In at least some example embodiments, the GUI may display one or more email identifiers to identify the email account being set up. That is, the email identifier identifies the email address being set up when information is input into the interface element fields. The email identifier may be displayed in various formats, and may include any one or combination of logos, icons, alphanumeric characters, etc. that identify the email address being set up.

In at least some example embodiments, the email information may include an email address. An email address may have two parts, a username portion (also referred to as a local part portion) and a domain name portion. The username portion precedes the "@" symbol of the email address, and may define the username of the recipient. The part after the "@" symbol is the domain name portion to which an email message is sent. That is, the domain name portion defines the email service provider that hosts the mailbox to which the email message is sent.

In at least some example embodiments, the first electronic device 106, in configuring the email application, may search and/or parse the received email information for an email address. If, after searching and/or parsing, an email address is found, the first electronic device 106 may extract the email address. In at least some example embodiments, the first electronic device 106 may utilize the domain name portion of the located email address to identify the email service provider associated with the email address. That is, the domain name portion defines the email service provider hosting the email address for which the email application 226 is configured. For example, an email application 226 that identifies a domain name portion of an email address as "gmail.com" is configured to populate interface elements within a GUI displayed by the email application 226 to set up a "Gmail" associated email address.

In at least some example embodiments, after extracting an email address from the email information (*i.e* during configuration), the first electronic device 106 may populate one or more interface elements in a GUI displayed by the email application 226 with the username portion of the email address. For example, the email application 226 may populate a username field in the GUI with the username portion of the email address. That is, the username field is filled with the username associated with the email address to set up the email address with the email application 226.

In at least some example embodiments, the first electronic device 106 may populate the email application 226 with the extracted email address when configuring the email application. For example, the first electronic device 106 may populate one or more interface elements (such as an email address field) in a GUI displayed by the email application 226 with the email address.

In at least some example embodiments, the first electronic device 106 may send the extracted email address to a generalized search tree (Gist) application that may be hosted by a different device, system and/or server (for example Gist^{™} by Research in Motion). The Gist application may use the username portion of the email address to search for related email addresses in the network 124 which includes the internet and one or more private networks, and associated devices, systems and/or servers. That is, the Gist application searches for other email addresses that may be associated with the user. The located email addresses are sent to the first electronic device 106. The first electronic device 106 may then use these received email addresses to configure the email application 226 for email account setup.

In at least some example embodiments, the email information includes an email account identifier. The email account identifier identifies an email address type. That is, the email account identifier describes the purpose of the email address. For example, the email account identifier may define a work, a personal, a secondary, etc. email address type.

In at least some example embodiments, the first electronic device 106, in configuring the email application 226, may search and/or parse the received email information for an email account identifier. If, after searching and/or parsing, an email account identifier is found, the first electronic device 106 may extract the email account identifier. In such example embodiments, the first electronic device 106 may populate the email application 226 with the extracted email account identifier during the configuration process. For example, the first electronic device 106 may populate one or more interface elements (such as an email address type field) in a GUI displayed by the email application 226 with the email address type to describe the email address.

The email application 226 may be configured to set up a plurality of email addresses, and is not limited to setting up only one email address. For example, the email information may include a plurality of email addresses that may be extracted along with other associated information by the first electronic device 106 to populate one or more interface elements in GUIs for setting up each associated email address. That is, a plurality of GUIs each associated with an extracted email address are populated for email account setup. In such example embodiments, the first electronic device 106 may further provide notification of the type and number of email addresses to set up. For example, the GUI may display email identifiers indicating the type and number of email addresses to set up. Accordingly, a user of the first electronic device 106 may be informed of the number and type of email addresses to set up.

In at least some example embodiments, the email application 226 is configured during a first start of the email application 226. That is, email account configuration for the email application 226 occurs when the email application 226 is started for the first time. For example, a user accessing the email application 226 for the first time may configure the email application 226 to populate one or more interface elements of a GUI to set up an email account.

In at least some example embodiments, the first electronic device 106 may automatically configure the email application 226. That is, the first electronic device 106 configures the email application 226 after email information is received from the administration server 132, without the need for further input from a user. However, in other example embodiments, further user input is required from a user via an input interface 206 associated with the first electronic device 106 in order to configure the email application 226. For example, after receiving the email information, a prompt may be presented via an output interface 205 (such as a display 204) associated with the first electronic device 106 to request confirmation to populate one or more interface elements in an account configuration GUI of the email application 226 (*i.e*. configure the email application 226). When confirmation is received by a user via an input interface 206 (such as a navigational input device) associated with the first electronic device 106, the one or more interface elements are populated.

In at least some example embodiments, after one or more interface elements in an account configuration GUI provided by the email application 226 are populated, further user input may be required in one or more interface elements (that may remain unpopulated) in order to configure the email application 226 to setup a mailbox for the associated email address. For example, a user may have to input a password into a password field which remains unpopulated after the configuration process of 400 in order to setup a mailbox for the associated email address in the email application 226. In such example embodiments, the information in the unpopulated one or more interface elements may be inputted via an input interface 206 (such as a navigational input device) associated with the first electronic device 106.

In at least some example embodiments, the email application 226 is configured for email account setup when the first electronic device 106 and the second electronic device 108 are within a particular distance of another. That is, email application 226 configuration only occurs if the first electronic device 106 determines that the second electronic device 108 is within a threshold distance from the first electronic device 106. For example, the email application 226 configuration may only occur if the first electronic device 106 detects the second electronic device 108 within a particular proximate distance from the first electronic device 106.

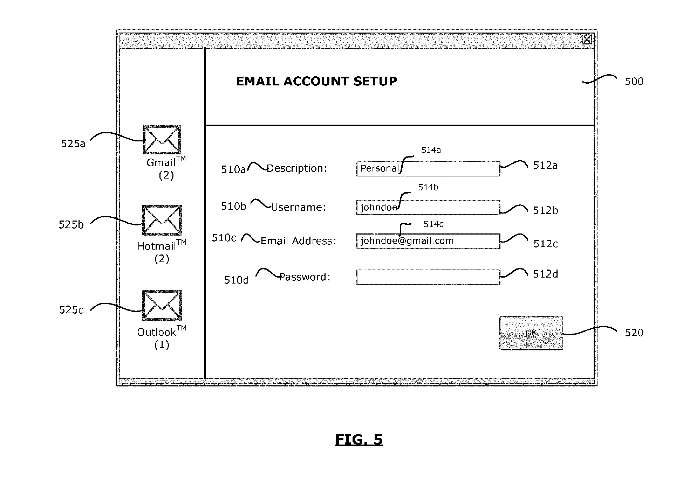

An example email account configuration page for email account setup will now be discussed with reference to FIG. 5. The email account configuration page 500 may be provided by the email application 226 of the first electronic device 106. The email account configuration page 500 includes a number of interface element identifiers 510a, 510b 510c, 510d (for example, a "description", a "username", an "email address" and a "password" identifiers) that are associated with a number of interface element fields 512a, 512b, 512c, 512d. Email information may be received in the interface element fields 512a, 512b, 512c, 512d. In the illustrated example, email information is included in the interface element fields 512a, 512b, 512c, 512d, and may be received after configuration of the email application 226. That is, the interface element fields 512a, 512b, 512c, 512d are populated with extracted email information, received from the administration server 132.

For example, the "description" interface element field 512a is populated with an email address type (for example, the word "personal" 514a), the "username" interface element field 512b is populated with the username portion of an email address (for example, the username "johndoe" 514b), and the "email address" interface element field 512c is populated with the email address (for example, the email address "johndoe@gmail.com" 514c). Additionally, the email application 226 is being configured for a "Gmail" account setup which may be identified by the domain name portion of the email address. The "password" interface element field 512d is unfilled and a user may input password information into it. The email account configuration page 500 additionally includes an "OK" interface element button 520 to provide execution functions. That is, after information has been input into all the interface element fields 512a, 512b, 512c, 512d, and the "OK" interface element button 520 is selected (for example, by an input interface 206), the email application 226 may be configured to setup a mailbox associated with the email address (i.e. johndoe@gmail.com) that is accessible to a user on the first electronic device 106.

The email account configuration page 500 further includes a number of email identifiers 525a, 525b, 525c that identify the email addresses for each email service provider and the number of email addresses for each email service provider to set up. That is, the email identifiers 525a, 525b, 525c may provide notification to a user of the identity and number of email addresses to set up. For example, the "Gmail" email identifier 525a indicates that there are two "Gmail" associated email addresses to set up, the "Hotmail" email identifier 525b indicates that there are two "Hotmail" associated email addresses to set up and the "Outlook" email identifier 525c indicates that there is one "Outlook" associated email address to set up.

The email identifiers 525a, 525b, 525c may further identify the email account being configured for an email address. Accordingly, these email identifiers 525a, 525b, 525c may be associated with interface elements (such as buttons, icons, texts, hyperlinks, areas, etc.) at or nearby the email identifiers 525a, 525b, 525c that are selectable to display a different email account configuration page. For example, in the illustrated FIG. 5, the "Gmail" email identifier 525a associated interface element is selected to display an email account configuration page to set up a first "Gmail" associated email address. Accordingly, a user is informed that a first "Gmail" associated email address is being setup. A selection of another (or same, as the "Gmail" email identifier 525a has two associated email addresses) interface element associated with the email identifiers 525a, 525b, 525c may display another email account configuration page corresponding to the selected interface element. For example, a selection of an interface element associated with the "Hotmail" email identifier 525b may display a first "Hotmail" email account configuration page. A further selection of the interface element associated with the "Hotmail" email identifier 525b may display a second "Hotmail" email account configuration page.

It will be appreciated that the configuration may not be limited to email applications for email account setup but may include social network applications (such as Twitter^{™} by Twitter Inc., Facebook^{™} by Facebook, Inc., Myspace^{™} by Specific Media, LLC, etc.) for social network account setup. That is, a social network application may be similarly configured for setting up an associated social network account. For example, in an example method (not shown) of configuring a social network application, the method may include 402, 404, 406, 408, 410 and 412 of method 400 (FIG. 4); however, instead of 414, the method may include configuring a social network application to populate the social network application based on the received email information for social network account setup.

For example, in at least some example embodiments, in configuring the social network application, the first electronic device 106 may search and/or parse the received email information for particular information. If, after searching and/or parsing, the particular information is found, the first electronic device 106 may extract the located information, and populate the social network application. For example, in at least some example embodiments, the social network may similarly display a GUI having one or more interface elements (such as one or more fields) for receiving email information. The one or more interface elements are populated with the extracted information. For example, a username field displayed by the GUI may be populated with a username portion of an email address that is located in the received email information. The username portion may be a user's credentials for account setup of the social network application.

While the present application is primarily described in terms of methods, a person of ordinary skill in the art will understand that the present application is also directed to various apparatus such as a handheld electronic device and a server. The handheld electronic device and the server includes components for performing at least some of the example aspects and features of the described methods, be it by way of hardware components (such as the memory and/or the processor), software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present application.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method implemented by a processor (240) of a first electronic device (106), the method comprising:
establishing a connection with a server (132) that stores email information received from a second electronic device (108);
receiving the email information from the server (132); and
populating one or more interface elements in an account configuration interface of the email application (226) based on the received email information for email account setup of one or more email addresses.

2. The method of claim 1, wherein the email information includes the email address, the email address having a domain name portion and a username portion.

3. The method of claim 2, wherein the domain name portion identifies one or more email service providers.

4. The method of any one of claims 2 or 3, wherein the one or more interface elements are populated with the username portion.

5. The method of any one of claims 2 to 4, wherein the one or more interface elements are populated with the email address.

6. The method of any one of claims 1 to 5, wherein the email information includes an email account identifier which identifies an email address type, and wherein the one or more interface elements are populated with the email account identifier.

7. The method of any one of claims 1 to 6, wherein the email information includes identification information associated with the first electronic device (106).

8. The method of any one of claims 1 to 7, wherein the account configuration interface includes an email identifier which identifies the email account being setup.

9. The method of any one of claims 1 to 8, further comprising:
prior to configuring the email application (226), presenting a prompt requesting confirmation to populate the one or more interface elements based on the received email information, and wherein said populating is performed in response to receiving the confirmation.

10. The method of any one of claims 1 to 9, wherein said establishing is performed during a first start of the email application (226).

11. A first electronic device (106) comprising:
a communication subsystem (211);
a memory (244); and
a processor (240) coupled with the memory (244) and the communication subsystem (211), the processor (240) being configured to perform the method of any one of claims 1 to 10.

12. A method implemented by a processor (310) of a server (132), the method comprising:
receiving a communication from a second electronic device (108), wherein the communication includes email information;
establishing a connection with a first electronic device (106); and
sending the email information to the first electronic device (106) to populate one or more interface elements in an account configuration interface of an email application (226) based on the email information for email account setup of one or more email addresses.

13. The method of claim 12, wherein the email information includes identification information, and further comprising: determining that the email information is associated with the first electronic device (106) based on the identification information prior to sending the email information.

14. The method of any one of claims 12 or 13, wherein the communication is an email message or an instant message.

15. A server (132) comprising:
a communication subsystem (320);
a memory (330); and
one or more processors (310) coupled with the memory (330) and the communication subsystem (320), the one or more processors (310) being configured to perform the method of any one of claims 12 to 14.
